# EUROPEAN PATENT APPLICATION

(11) **EP 4 094 917 A1**
(43) Date of publication of application: **30.11.2022**
(21) Application number: 20915595.1
(22) Date of filing: 31.12.2020
(51) Int. Cl.: B29C 44/02, B29C 44/10

(54) **SCALABLE MOLD STRUCTURE AND FOAM PREPARATION METHOD THEREOF**

(30) Priority: 20.01.2020 CN 202010067030
(71) Applicant: Herlin Up Co., Ltd., Zhuqi Township, Chiayi County 604 (TW)
(72) Inventor: LIN, Po-Chang, Township Chiayi County, Taiwan 604 (TW); CHIN, Kuang-Tse, Dali, Taichung City, Taiwan 412 (TW); YU, Ya-Chun, Nantou County, Taiwan 542 (TW); HSIEH, Jung-Hsiang, Chiayi County, Taiwan 604 (TW)
(74) Representative: Cabinet Chaillot
(86) International application number: PCT/CN2020/142207
(87) International publication number: WO 2021/147645

(57) **Abstract**

The present invention is related to a mold (10) with retractable structure comprising an upper lid (11), a bottom container (13) with a concave part and an accommodating space (12) being defined within the upper lid (11) and the bottom container (13). A retractable structure are deposited between the upper lid (11) and the bottom container (13) to adjust a size of a space of the accommodating space (12). By retraceable structure of the mold, the present invention provides a production method without using high-pressure water vapor equipment which could save the production cost of the conventional production. The foam material can be compressed during heating process by the mold of the present invention into a more compact condition to enhance the heat distribution and conduction. The present invention can also control the molding density, thickness and improve the surface smoothness of molded body of the final product to obtain a better yield rate. The manufacture will no longer need to invest high cost of high-pressure water vapor equipment to achieve a production of such foam products.

## Description

### FIELD OF INVENTION

The invention relates to a mold, especially to a mold with retractable structure capable of applying one or more pressure force to a foamed material such as foamed beads in a process of a foaming production method.

### BACKGROUND OF THE INVENTION

In the early days, foamed beads were mainly used in low-end cushioning, buffering or packaging products using polystyrene (PS) as main material. Recently, with successful advertising, marketing and publicity of new applications of shoe sole for sports, running shoes or sneakers by huge shoe companies and manufacturers, foamed beads start to attract more and more attention for further development and research as a trendy high-end product.

The current production method of foamed beads can be mainly divided into two stages. The first stage is to form the melt and liquid foamed material into foamed beads, and the second stage is to introduce these foamed beads into a mold to form into a molded body with special designed shape. Within the processes, the foamed beads are compressed and combined into a molded body through the high temperature using high-pressure steam.

However, the above production method requires a factory or a manufactory to invest additional equipment for introducing high-pressure water vapor, which not only increases the cost of production, but also taking more space to the factory. Further, the conventional high-pressure water vapor equipment normally has temperature limitation up to 150°C which is only suitable to use in the molding process of the foamed beads. Such temperature limitation making the conventional high-pressure water vapor equipment unable to apply to other material required higher temperature demands. The dedicated equipment investment will definitely increase the cost for the factory or manufactory.

### SUMMARY OF THE INVENTION

In order to solve shortcomings and problems of the high production cost of additional equipment for introducing high-pressure water vapor, the present invention provides a mold with retractable structure to improve the current problems. The mold of the present invention can be utilized to various of foam material without temperature limitation to reduce the extra cost of investing expansive equipment for the factory and provide high quality of foamed product. Furthermore, the present invention may not only use to produce foam material, it can be applied to any other suitable material using the same concept and idea to achieve high quality of final product.

The present invention firstly provides a mold with retractable structure comprises: an upper lid, a bottom container with a concave part and an accommodating space being defined within the upper lid and the bottom container; a foam material is included in the accommodating space; and a retractable structure are deposited between the upper lid and the bottom container to adjust a size of a space of the accommodating space.

In accordance, an outer surface of the upper lid is provided with an upper lid threaded surface, and an inner surface of the bottom container is provided with a bottom container threaded surface correspondingly with the upper lid threaded surface.

In accordance, the upper lid further comprises a retractable block for interacting inside the mold responding to a compressing force.

In accordance, a middle lid is further deposited between the upper lid and the bottom container.

More preferably, a middle lid component with multiple middle lids is further deposited between the upper lid and the bottom container.

In accordance, the bottom container is included with a heating or cooling device.

In accordance, the upper lid and the bottom container includes plastic, rubber, silicone, metal, glass or ceramic material.

In accordance, the foam materiel includes hot-melt fluidic status, semi-foamed status and fully foamed status before introducing into the mold.

In accordance, the mold comprises an input pipe and an output pipe.

Furthermore, the present invention also provides a production method using the aforementioned mold with retractable structure comprises steps of:
providing a mold with retractable structure as mentioned above;
closing the upper lid and the bottom container of the mold, the foam material is introduced to the accommodating space;
heating the upper lid and the bottom container, and adjusting a space of the accommodating space through the retractable structure during the heating process; and
forming a molded body after heating and adjusting a space of the accommodating space.

In accordance, the heating process including electromagnetic heating, microwave heating, electromagnetic heating, electric heating tube heating, infrared heating, hot air heating, high-frequency radiation heating, hot oil heating, hot water heating, direct thermal heating or its combination.

In accordance, the foam material includes hot-melt fluidic status, semi-foamed status and fully foamed status before introducing into the mold.

In accordance, the fully foamed status of the foam material is in a shape of bead, film, strip or star.

In accordance, the molded body includes a continuous foamed structure, a discontinuous foamed structure or a complex foamed structure.

In accordance, the foamed material is processed with additional water, the water is added or contained within the foam material.

In accordance, the present invention has the following advantages:

1. By retraceable structure of the mold, the present invention provides a production method without using high-pressure water vapor equipment which could save the production cost of the conventional production. The foam material can be compressed during heating process by the mold of the present invention into a more compact condition to enhance the heat distribution and conduction. The present invention can also control the molding density, thickness and improve the surface smoothness of molded body of the final product to obtain a better yield rate. The manufacture will no longer need to invest high cost of high-pressure water vapor equipment to achieve a production of such foam products.

2. The mold with retractable structure of the present invention can be produced with different material according to the heating means being applied to the mold during foaming process which could benefit the present invention being widely used in the molding and production of various foamed products.

### BRIEF DESCRIPTION OF THE DRAWINGS

FIG. 1 is an illustration of a first embodiment of the mold with retractable structure in accordance with the present invention;
FIG. 2A to FIG. C are multiple preferred embodiments of the input pipe and the output pipe being deposited on the mold in accordance with the present invention;
FIG. 3 is an illustration of a second embodiment of the mold with retractable structure in accordance with the present invention;
FIG. 4 is an illustration of a third embodiment of the mold with retractable structure in accordance with the present invention;
FIG. 5 is an illustration of a fourth embodiment of the mold with retractable structure in accordance with the present invention;
FIG. 6 is a flow chart of the production method by using the mold with retractable structure in accordance with the present invention.

### Reference numbers for each elements of the present invention:

- 10: Mold
- 11: Upper lid
- 111: Upper lid threaded surface
- 12: Accommodating space
- 13: Bottom container
- 14: Middle lid
- 141: middle lid component
- 131: Bottom container threaded surface
- 21: Retractable block

- F: Foam material
- I: Input pipe
- O: Output pipe

### DETAILED DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts. It is not intended to limit the method by the exemplary embodiments described herein. In the following detailed description, for purposes of explanation, numerous specific details are set forth in order to attain a thorough understanding of the disclosed embodiments.

### <Mold with retractable structure embodiment 1>

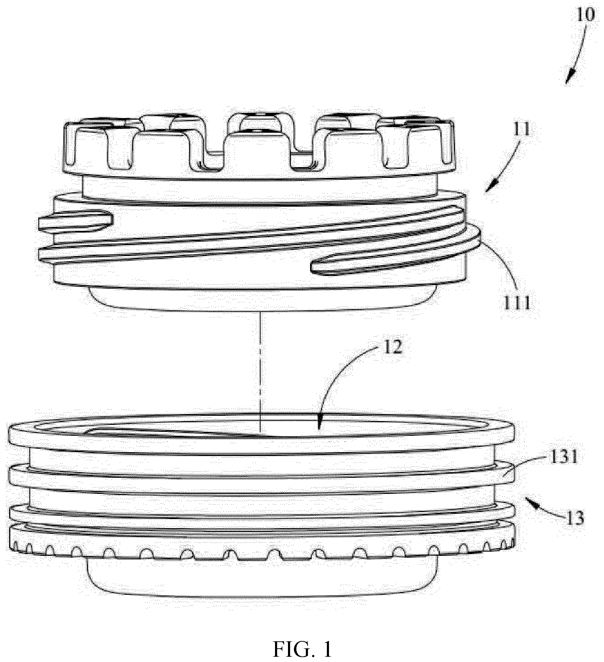

With reference to FIG. 1, the present invention provides a mold with retractable structure 10. The first preferred embodiment of such mold including: an upper lid 11, a bottom container 13 with a concave part and an accommodating space 12 being defined within the upper lid 11 and the bottom container 13.

In this embodiment, in order to achieve the retractable structure of the mold 10, a bottom of the upper lid 11 is preferably convex and covers the concave part of the bottom container 13 to form the accommodating space 12. An outer surface of the upper lid 11 is provided with an upper lid threaded surface 111, and an inner surface of the bottom container 13 is provided with a bottom container threaded surface 131 correspondingly with the upper lid threaded surface 111. However, the above-mentioned upper lid threaded surface 111 and the bottom container threaded surface 131 are not limited to be disposed on the outer surface or the inner surface of the upper lid 11 and the bottom container 13. Any suitable adjustment to be deposited on the upper lid 11 and the bottom container 13 which could make these two parts air or fluid tightly sealed is considered to fall within the scope of the present invention.

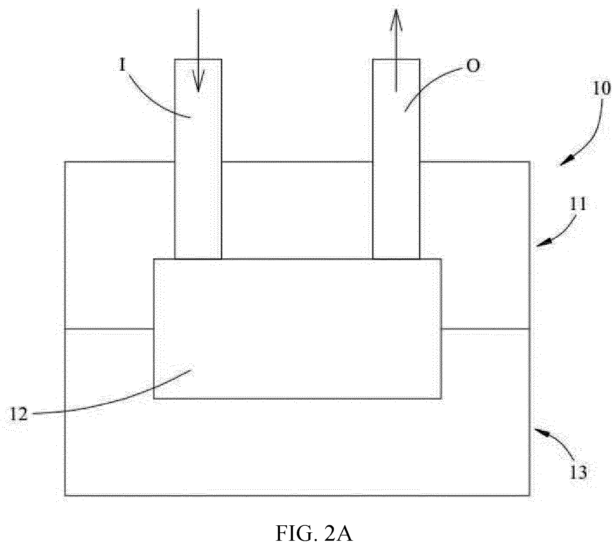

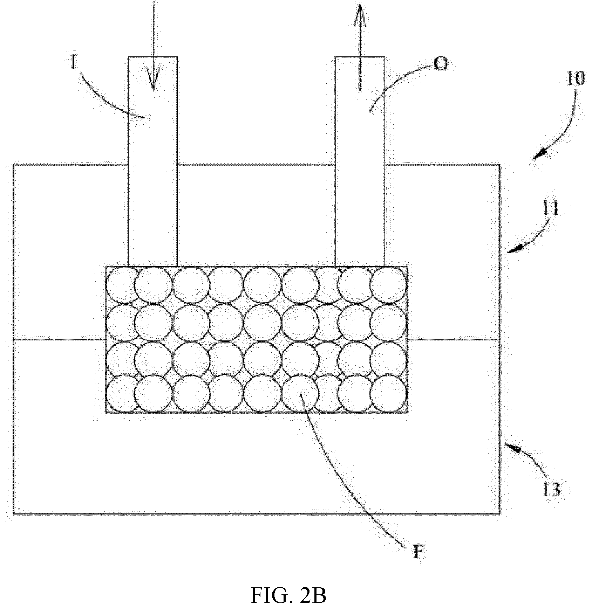

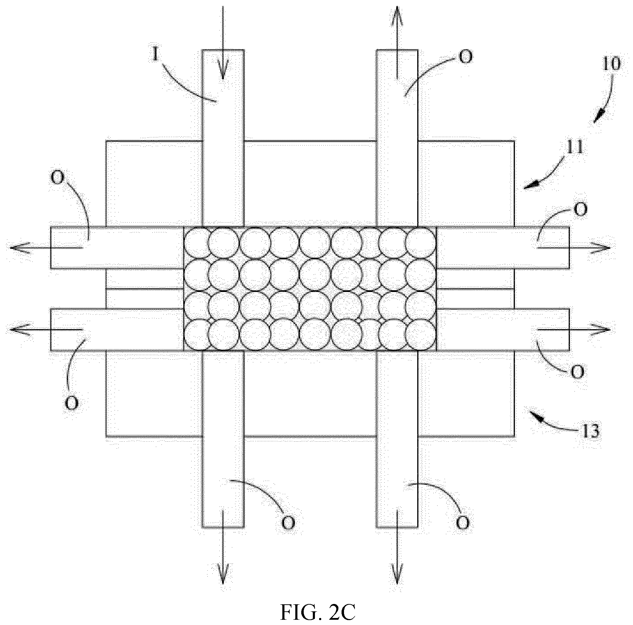

When implementing the upper lid 11 and the bottom container 13 provided in this embodiment with corresponding threaded surfaces, the upper lid 11 and the bottom container 13 are screwed together to form the accommodating space 12. A foamed material F is introduced to the accommodating space 12, preferably through an input pipe I and output pipe O (as shown in FIG. 2). During such step, air originally stays within the accommodating space 12 can be simultaneously removed. Further, when apply a heat towards to the mold 10, by adjusting with different degree of the upper lid 11 and the bottom container 13 being screwed together, a size of the accommodating space 12 could be intentionally increased or decreased according to the requirement of how the foamed material F needed to be formed.

A preferred embodiment of the above-mentioned input pipe I and the output pipe O could be referred to FIG. 2A to FIG. 2C. In this preferred embodiment, the input pipe I and the output pipe O communicate with an outside environment from the mold 10. Under this basis, a position and a number of the input pipe I and the output pipe O can be varied from the mold 10. In this embodiment, each one of the input pipe I and the output pipe O are deposited on the upper lid 11 respectively as shown in FIG. 2A. After the upper lid 11 and the bottom container 13 are closed together, the foam material F is introduced into the accommodating space 12 through the input pipe I and the air will be pushed out from the accommodating space 12 via the output pipe O simultaneously. More preferably, to avoid the foam material F being discharged from the output pipe O with the air, a filter or a screen could be further included at an end or an outlet of the output pipe O. To facilitating the air being expelled from the mold 10, multiple output pipe O are preferred to be included on the mold 10. More preferably, the input pipe I and output pipe O could also in a form of holes or slits as an opening from the mold 10 to expel the air from accommodating space 12.

### <Mold with retractable structure embodiment 2>

A second preferred embodiment of the mold 10 of the present invention is basically same as the aforementioned first embodiment including the upper lid 11 and the bottom container 13 which these two components can be closed together to form the accommodating space 12.

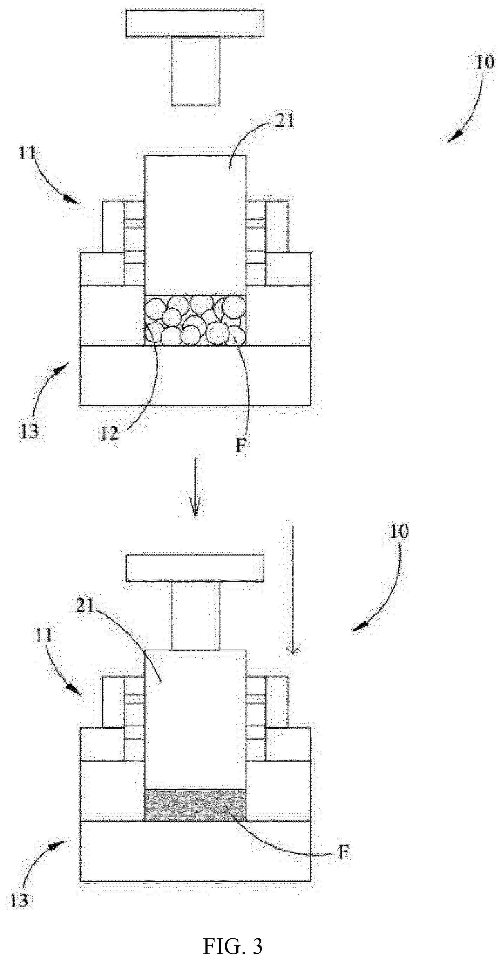

With reference to FIG. 3, in this second preferred embodiment, the retractable structure of the mold 10 could be the upper lid 10 comprising a retractable block 21 which could be interacting inside the mold 10 responding to a compressing force. For example, the compressing force could be applied to the retractable block 21 to have it reduces the space within the accommodating space 12 and after releasing the compressing force, the retractable block 21 will bounced back to its original position.

When in use in this embodiment, the upper lid 11 and the bottom container 13 are closed, and then the foamed material F is introduced into the accommodating space 12. During this process, the upper lid threaded surface 111 and the bottom container threaded surface 131 could be eliminated from the upper lid 11 and the bottom container 13 by simply closing these two parts by clamping means. Further applying a heat and accompanying with the compressing force to the retractable block 21 to reduce the space within the accommodating space 12 making the foamed material F being compressed tightly inside the mold 10. To close the upper lid 11 and the bottom container 13, despite the upper lid threaded surface 111 and the bottom container threaded surface 131 and the clamping means, another preferred embodiment could be a corresponded buckle structure being deposited on the upper lid 11 and the bottom container 13.

### <Mold with retractable structure embodiment 3>

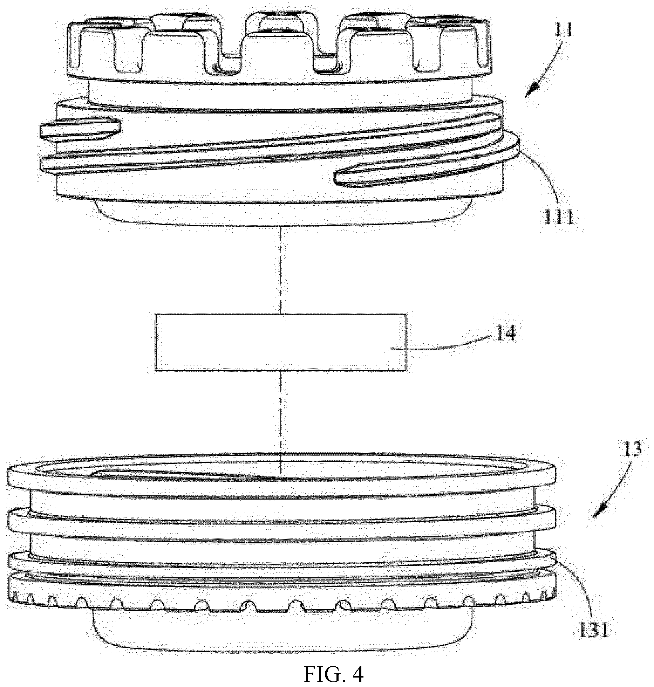

With reference to FIG. 4, a third referred embodiment of the mold 10 of the present invention further provided another variant structure for the upper lid threaded surface 111 and the bottom container threaded surface 131 as mentioned in the first embodiment. The existence of the upper lid threaded surface 111 and the bottom container threaded surface 131 implies that the mold 10 requires being in a round shape which is not flexible to produce products with different shapes. To modify such limitation of the first embodiment, a middle lid 14 can be further deposited between the upper lid 11 and the bottom container 13 to also achieve reducing the space of the accommodating space 12 during processing. However, the middle lid 14 will not rotate along with the upper lid 11 and the bottom container 13 when the upper lid threaded surface 111 and the bottom container threaded surface 131 being screwed and closed together. As such, the mold 10 could process the foam material F into non-circular or asymmetrical shapes. By reducing the space of the accommodating space 12, the foam material F could be further compressed more tightly to have a more evenly heating result.

On the other hand, the bottom container 13 of the present invention can be provided with a heating or cooling device (not shown in the figures) according to requirements. The mold 10 can be directly heated by the heating device or cooled by the cooling device after processing.

### <Mold with retractable structure embodiment 4>

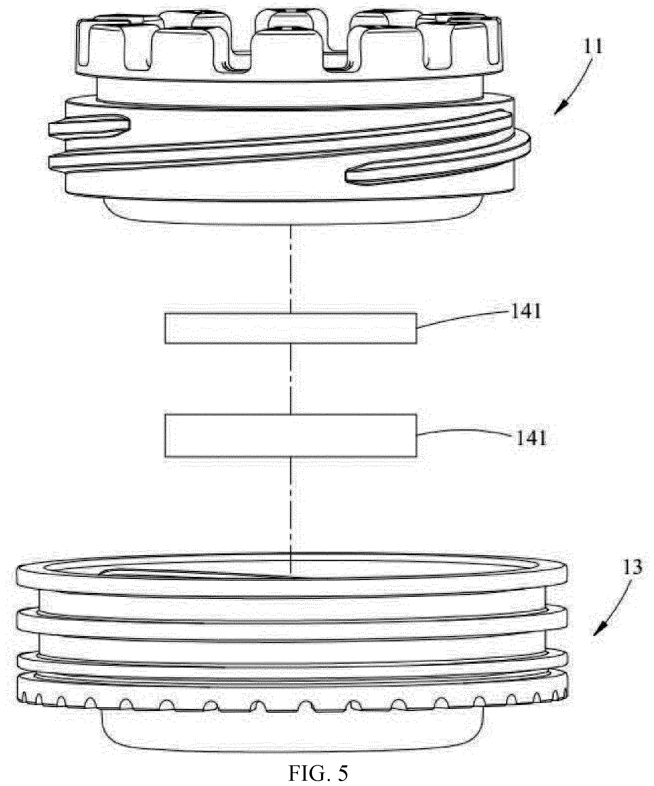

With reference to FIG. 5, a fourth preferred embodiment of the mold 10 of the present invention is another preferred embodiment of the middle lid 14 from the third preferred embodiment. A middle lid component 141 with multiple middle lids 14 can be included to the present invention. The middle lid component 141 with multiple middle lids 14 can be integrated as a larger piece from dimension or thickness. In this embodiment, two middle lids 14 are stacked together to have a thicker piece according to the demands of the process. Further, a heat dissipation of the mold 10 could also be improved by using fewer pieces of the middle lids 14 to have a more flexible production and better forming quality to the final product or a molded body.

### <Embodiment 1 of Production method using the mold>

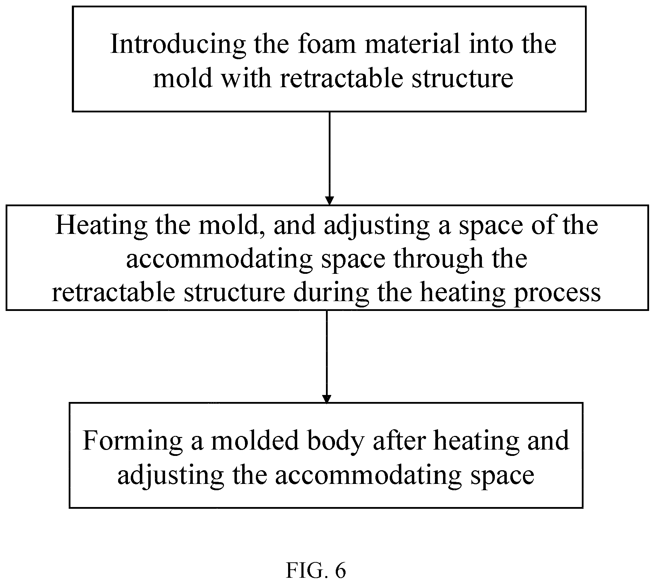

With reference to FIG. 6, a production method of the present invention corresponding to the above-mentioned several embodiments of the mold 10 comprises steps of:
Step 1: After closing the upper lid 11 and the bottom container 13, the foam material F is introduced to the accommodating space 12. A retractable structure is deposited between the upper lid 11 and the bottom container 13 to adjust the accommodating space 12 during the process;
Step 2: heating the upper lid 11 and the bottom container 13, and adjusting a space of the accommodating space 12 through the retractable structure during the heating process; and
Step 3: forming a molded body after heating and adjusting a space of the accommodating space.

The above-mentioned heating process includes but not limited to electromagnetic heating, microwave heating, electromagnetic heating, electric heating tube heating, infrared heating, hot air heating, high-frequency radiation heating, hot oil heating, hot water heating, direct thermal heating or its combination.

### <Embodiment of a material of the mold>

A suitable material to make the mold 10 of the present invention could be variant from the heating process. If the mold 10 includes the upper lid 10, the bottom container 13 and the middle lid 14, these parts could have different material according to the heating source being applied to such part. The material could be but not limited to plastic, rubber, silicone, metal, glass or ceramics. More specifically, if a microwave heating is intended, the upper lid 11 and the middle lid 14 are preferably to include plastic, rubber, or silicone material that can penetrate microwaves energy. If a electromagnetic heating or a direct thermal heating are intended, the bottom container 13 is preferred to have the material of metal, glass, or ceramic to successfully transmit the heating towards to the foam material F within the mold 10.Further considering the smoothness of closing the upper lid 11 and the bottom container 13 by the upper lid threaded surface 111 and the bottom container threaded surface 131 and also the better heat dissipation result, the middle lid 14 could include the material of plastic, glass or ceramics with multiple integratable pieces.

The upper lid 11 and the bottom container 13 of the mold 10 can be produced by CNC machining, laser machining, casting, stamping, sand-turning, over-molding, rapid prototyping, hot-pressing, injection molding or 3D printing and other processing methods according to the material.

### <Foam material>

The foam material F can be categorized into three different types according to its status when introduced into the mold 10. One is a status of such foam material that has not been processed before, or more specifically in a raw material status. Second is a semi-foamed status of such foam material F that has been partially processed before introducing into the mold 10. The last is a full foamed status of such foam material F that has been fully processed before introducing into the mold 10. The first status as mentioned above is referred to a raw material being processed by the conventional heat kneading process without any chemical or physical foam reaction. Normally, such raw material is in a hot-melt fluidic status being introduced into the mold 10 of the present invention for further processing. As this kind of hot-melt fluidic status material is preferred to have at least some elasticity, the mold 10 could be able to compress the foam material F during heating and obtain a better forming quality to the final product or the molded body. The second status as mentioned above is referred to a semi-foamed material or a partially foamed material which a raw material being processed by the conventional heat kneading process with a partially foamed reaction (or also called micro-foaming). To achieve such semi-foamed status, the foam material F may include foaming agent which only partially reacted during the conventional heat kneading process before introducing to the present invention or the foam material F may include at least two kinds of foaming agents reacting in different temperature. The foam material F in such semi-foamed status normally has micro-foams or micro bubbles structure at the first semi-foamed process before introducing into the present invention. The fully foamed status of such foam material F is referred to a fully foamed material and maybe already into a shapes of particles. By introducing such semi-foamed or fully foamed particles into the present invention, the retractable structure of the mold 10 could compress the particles into a tighter and compact condition so as the heat could transfer more evenly among all the particles to have a better foamed quality. The fully foamed status of such foam material F could be prepared by adding a physical foaming agent and produced by a continuous melt extrusion, high-pressure fluid impregnation to reach a dissolution balance, a primary heating foaming process, a secondary heating foaming process, a pressure-loading treatment, etc. into a granulation/sheet. More preferably, by supercritical fluid foaming, the foam material F could be foamed beads, such as expanded thermoplastic polyurethane (E-TPU) foamed beads, and the shape is preferably as a bead, plate, strip, star or other irregular shapes.

Further, the foamed material F can preferably be processed with additional water. The water could be added or contained within the material. During the heating process, the water will be vaporized into steams and create pressure to against the retractable structure of the present invention to achieve more efficiency and high quality of thermo forming process.

The final product or the molded body of the present invention may have a continuous foamed structure, a discontinuous foamed structure or a complex foamed structure depending on the compressing force being applied to the retractable structure and the heating distribution of the foam material F. The continuous foamed structure could be referred to the above-mentioned first status of the hot-melt fluidic status being introduced into the mold 10 of the present invention for further processing into a continuous foamed structure. The discontinuous foamed structure could be referred to the above-mentioned semi-foamed or fully foamed status of the foam material F to be processed by the present invention. The semi-foamed or fully foamed status of the foam material F in a particle or granule status will be adhered together by the present invention. Each of the foam cell of such discontinuous foamed structure is adhered individually to form the discontinuous foamed structure. The complex foamed structure could be referred to have the foam material F as multiple different material to be processed by the present invention into the final product or molded body with complex foaming result within one piece.

The final product or the molded body of the present invention can be produced in any shape and applied to any field, such as sheet, plate or any other irregular-shaped to be as a packaging material, a buffering material or a shoe material for being floor mats, puzzle floor mat, container, shoe sole or mattress, etc. Especially to the applications of mats, the present invention provides a mold 10 and a production method could process the foam material F with multiple different compositions. Further could applied any suitable surface material like cloth, wood grain, stone, etc., as surface material to increase its variety, aesthetics and quality.

The above specification, examples, and data provide a complete description of the present disclosure and use of exemplary embodiments. Although various embodiments of the present disclosure have been described above with a certain degree of particularity, or with reference to one or more individual embodiments, those with ordinary skill in the art could make numerous alterations or modifications to the disclosed embodiments without departing from the spirit or scope of this disclosure.

## Claims

1. A mold with retractable structure, **characterized in that** the mold comprising: an upper lid (11), a bottom container (13) with a concave part and an accommodating space (12) being defined within the upper lid (11) and the bottom container (13); a foam material (F) is included in the accommodating space (12); and
a retractable structure are deposited between the upper lid (11) and the bottom container (13) to adjust a size of a space of the accommodating space (12).

2. The mold as claimed in claim 1, wherein: an outer surface of the upper lid (11) is provided with an upper lid threaded surface (111), and an inner surface of the bottom container (13) is provided with a bottom container threaded surface (131) correspondingly with the upper lid threaded surface (111).

3. The mold as claimed in claim 1, wherein: the upper lid (10) further comprises a retractable block (21) for interacting inside the mold (10) responding to a compressing force.

4. The mold as claimed in claims 1, 2 or 3, wherein: a middle lid (14) is further deposited between the upper lid (11) and the bottom container (13).

5. The mold as claimed in claim 1, wherein: a middle lid component (141) with multiple middle lids (14) is further deposited between the upper lid (11) and the bottom container (13).

6. The mold as claimed in claims 1, 2 or 3, wherein: the bottom container (13) is included with a heating or cooling device.

7. The mold as claimed in claims 1, 2 or 3, wherein: the upper lid (10) and the bottom container (13) includes plastic, rubber, silicone, metal, glass or ceramic material.

8. The mold as claimed in claims 1, 2 or 3, wherein: the foam materiel includes hot-melt fluidic status, semi-foamed status and fully foamed status before introducing into the mold.

9. The mold as claimed in claims 1, 2 or 3, wherein: the mold (10) comprises an input pipe (I) and an output pipe (O).

10. A production method using a mold with retractable structure, **characterized in that** the method comprises the steps of:
providing a mold (10) with retractable structure as claimed in claim 1;
closing the upper lid (11) and the bottom container (13) of the mold, the foam material (F) is introduced to the accommodating space (12);
heating the upper lid (11) and the bottom container (13), and adjusting a space of the accommodating space (12) through the retractable structure during the heating process; and
forming a molded body after heating and adjusting a space of the accommodating space.

11. The method as claimed in claim 10, wherein: the heating process including electromagnetic heating, microwave heating, electromagnetic heating, electric heating tube heating, infrared heating, hot air heating, high-frequency radiation heating, hot oil heating, hot water heating, direct thermal heating or its combination.

12. The method as claimed in claim 10, wherein: the foam material includes hot-melt fluidic status, semi-foamed status and fully foamed status before introducing into the mold.

13. The method as claimed in claim 12, wherein: the fully foamed status of the foam material is in a shape of bead, film, strip or star.

14. The method as claimed in claim 10, wherein: the molded body includes a continuous foamed structure, a discontinuous foamed structure or a complex foamed structure.

15. The method as claimed in claims 10, 11 or 12, wherein: the foamed material (F) is processed with additional water, the water is added or contained within the foam material (F).
